# EUROPÄISCHE PATENTSCHRIFT

(11) **EP 1 523 626 B1**
(45) Veröffentlichungstag und Bekanntmachung des Hinweises auf die Patenterteilung: **01.02.2006**
(21) Anmeldenummer: 03766153.5
(22) Anmeldetag: 11.07.2003
(51) Int. Cl.: F15B 15/14, F15B 15/24, F15B 15/20, F15B 20/00, B30B 15/28, F16P 3/16

(54) **HYDRAULIKZYLINDER**
HYDRAULIC CYLINDER
CYLINDRE HYDRAULIQUE

(30) Priorität: 24.07.2002 DE 10233669
(43) Veröffentlichungstag der Anmeldung: 20.04.2005
(73) Patentinhaber: BTM (Europe) Blechverbindungstechnik GmbH, 59597 Erwitte (DE)
(72) Erfinder: BEULE, Ulrich, 59929 Brilon (DE)
(74) Vertreter: Fischer, Matthias
(86) Internationale Anmeldenummer: PCT/EP2003/007538
(87) Internationale Veröffentlichungsnummer: WO 2004/013496

(56) Entgegenhaltungen:
- FR-A- 2 538 047
- US-A- 2 858 804
- US-A- 5 918 526

## Beschreibung

Die vorliegende Erfindung betrifft einen Hydraulikzylinder mit einer eine Werkzeugaufnahme tragenden Kolbenstange.

Für mechanische Umform- oder Fügeprozesse, wie z.B. Stanzen, Prägen, Bördeln, Crimpen, Nieten oder Clinchen, werden aufgrund der erforderlichen Preßkraft meist Hydraulikantriebe mit Hydraulikzylindern eingesetzt. Aus Sicherheitsgründen werden bei Überschreiten des Krafthubes von Hydraulikzylindern von mehr als 6 mm erhöhte Sicherheitsanforderungen an die verwendeten Systeme gestellt. So müssen zur Vermeidung von Gefahren aufwendige Schutzvorhänge und/oder mechanische, pneumatische oder elektrische Verriegelungen vorgesehen werden. Dadurch ist die Bedienungsperson bei "Handlings"-Arbeiten im Gefahrenbereich des Stößels einer entsprechenden Umform- oder Fügevorrichtung sehr eingeschränkt.

Es sind Hydraulikzylindersysteme bekannt, die über einen zusätzlichen Steuerkreis den Volumenstrom des Hydraulikmediums im Hydraulikzylinder abschalten. So ist beispielsweise eine Presse bekannt, bei der der Krafthub erst dann zugeschaltet wird, wenn über einen Stößel einer Werkzeugaufnahme durch das zu bearbeitende Bauteil hindurch eine elektrisch leitende Verbindung geschaffen ist. Hier wird eine "Fingersicherheit" aufgrund der Nichtleitung des Fingers oder der Finger sichergestellt. Es sind weitere Vorrichtungen bekannt, bei denen zwei voneinander unabhängig arbeitende elektrische Sensoren sicherstellen, daß der Krafthub erst ab 6 mm erfolgt.

Daneben ist eine Presse bekannt, die ein internes Wegmeßsystem verwendet, um nach vorhergehender Kalibrierung den Krafthub auf 6 mm zu reduzieren bzw. erst einsetzen zu lassen.

Aus der US-A-5,918,526 ist ein Hydraulikzylinder 1 bekannt, mit einer wenigstens eine Werkzeugaufnahme tragenden Kolbenstange, mit einer hydraulisch-mechanisch gesteuerten Selbstabschaltungseinrichtung 4, 7.1, 7.2, mit einem Medium zum Betreiben des Hydraulikzylinders, wobei das Medium, welches zum Kraftaufbau verwendet wird, gleichzeitig das Medium für die Selbstabschaltungseinrichtung ist, mit einem ersten Ventilschieber 7.1 und einem zweiten Ventilschieber 7.2, die geeignet sind, eine Bewegung eines mit der Kolbenstange verbundenen Kolbens abhängig von einem etwaigen im Fahrweg der ausfahrenden Kolbenstange vor einer Sollposition befindlichen Hindernis durch Umleitung des Mediums im Bereich des Kolbens, abzuschalten (siehe Spalte 2, Zeile 61 bis Spalte 3, Zeile 10). Die in dieser Patentschrift beschriebene Vorrichtung ändert zwar beim Auftreffen auf ein Hindernis ihre Richtung aber nicht in einem definierten Weg und nicht mit einer definierten Kraft. Das Umsteuern erfolgt durch den Differenzdruck zwischen der be- und entlastenden Kolbenseite mit den diesem Verfahren anhaftenden Toleranzen. Das hier offenbarte System ist zum Personenschutz ungeeignet. Außerdem ist die Vorrichtung in dieser Form nur in waagrechter Lage des Zylinders zu betreiben.

Andere Lösungswege bestehen z.B. darin, über einen Klappmechanismus die Störkontur um das die Hände der Bedienungsperson gefährdende Gebiet zu überwinden und erst dann den Krafthub im eingeklappten Zustand auszulösen.

Es ist auch eine Vorrichtung mit kraftlosem partiellem Vorschub bekannt, die sich dadurch auszeichnet, daß die darin eingesetzte Ansteuerung des Vorschubes pneumatisch erfolgt und auf einen Gesamthub von 60 mm beschränkt ist.

Ein anderer Lösungsweg besteht darin, den Sicherheitsabstand von 6 mm zu umgehen, dadurch, daß die Vorschubgeschwindigkeit auf ein vorgeschriebenes Maß beschränkt wird, um ein rechtzeitiges Entfernen/Zurückziehen der Gliedmaßen der Bedienungsperson zu gewährleisten.

Es ist eine Aufgabe der Erfindung, einen Hydraulikzylinder vorzuschlagen, der die aus dem Stand der Technik bekannten aufwendigen und kostenintensiven Vorkehrungen möglichst vermeidet.

Die Aufgabe wird gelöst mit einem Hydraulikzylinder gemäß Anspruch 1. Hierdurch läßt sich vorteilhafterweise ein zusätzlicher Steuerkreis, sei er pneumatisch, elektrisch, mechanisch oder eine Kombination hieraus, erübrigen. Dadurch wird die Vorrichtung bei gleicher Betriebssicherheit wesentlich kostengünstiger als bekannte Systeme. Hierbei ist das Medium (z.B. Hydrauliköl), welches zum Kraftaufbau verwendet wird, gleichzeitig auch das Medium für die Sicherheitsabschaltung. Es sind hier beispielsweise auch andere Medien, wie Wasser o.ä., einsetzbar. Ein weiterer Vorteil besteht darin, daß die erfindungsgemäße Vorrichtung nicht auf einen Gesamthub beschränkt ist. Theoretisch lassen sich alle technisch herstellbaren gewünschten Hübe realisieren. Daneben ergibt sich durch die erfindungsgemäße Vorrichtung noch der Vorteil, daß sie nicht auf eine maximale Vorschubgeschwindigkeit beschränkt ist. Sowohl die Vorhub- als auch die Krafthubgeschwindigkeit ist beim Einsatz der erfindungsgemäßen Vorrichtung frei wählbar, soweit es die technischen Vorkehrungen (vorhandener Volumenstrom, Zuleitungsquerschnitte etc.) ermöglichen. Daneben kann mit der erfindungsgemäßen Vorrichtung vorteilhafterweise eine interne Verdrehsicherung integriert sowie über eine durchgehende Kolbenstange eine externe verstellbare Gesamthubbegrenzung angebaut werden, die es ermöglicht, in jeder beliebigen Stellung den Rückhub des Kolbens/Stößels und damit den Gesamthub auf einfache Weise zu begrenzen.

Die erfindungsgemäßen Sicherheits- oder Selbstabschaltungist mit zwei unabhängig voneinander arbeitenden Ventilschiebern versehen, d. h. bei Versagen einer Komponente ist eine Vorwärtsbewegung des gegebenenfalls zur Gefahr werden könnenden Stößels nicht mehr möglich.

Eine vorteilhafte Aus- bzw. Weiterbildung der Erfindung ergibt sich aus dem Unteranspruch.

Zum besseren Verständnis der Erfindung und um zu zeigen, wie diese ausgeführt werden kann, wird sie im folgenden anhand eines Ausführungsbeispiels kurz beschrieben.
- Fig. 1: zeigt drei Stellungen a, b und c eines erfindungsgemäßen Hydraulikzylinders in verschiedenen Arbeitspositionen.
- Fig. 2: zeigt ein Ausführungsbeispiel eines erfindungsgemäßen Hydraulikzylinders, wobei die Darstellung 2a den Zylinder von der Seite und die Darstellung 2b den Zylinder von oben zeigt.
- Fig. 3: zeigt eine Vergrößerung eines Ausschnitts von Fig. 2a.
- Fig. 4: zeigt eine Vergrößerung eines Ausschnitts von Fig. 2b.

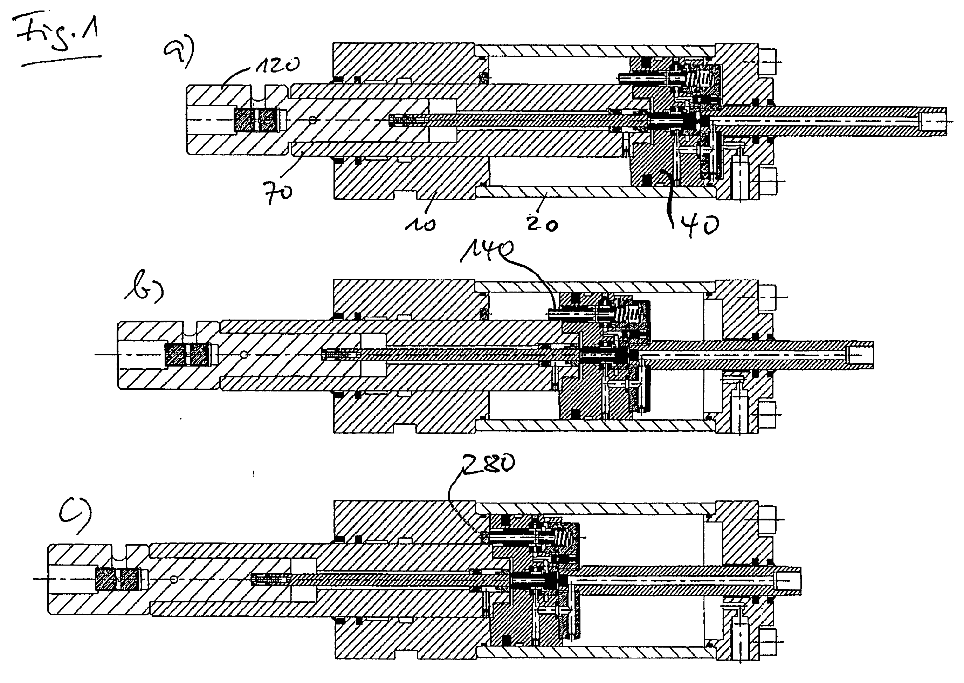

Die in Fig. 1 gezeigten Darstellungen zeigen folgende Arbeitspositionen:
Stellung a zeigt die Startposition. Stellung b zeigt die Abschaltposition, in der ein Hindernis im geplanten Fahrweg der ausgefahrenen Kolbenstange des Zylinders angetroffen wird. Stellung c zeigt einen Hydraulikzylinder mit voll ausgefahrener Kolbenstange nach Beendigung des vollständigen Krafthubes.

Unter Zuhilfenahme der Figuren wird ein Funktionsablauf des Arbeitsprogramms des erfindungsgemäßen Hydraulikzylinders beschrieben. Die in den Fig. 1a, 2a und b sowie 3 gezeigte Position der Komponenten des erfindungsgemäßen Hydraulikzylinders geben die Ausgangsstellung (Stellung a) an. Ein Kolben 40 befindet sich hierbei in der äußersten rechten Position in einem teilweise gezeigten Zylindergehäuse 10. Im Zylindergehäuse 10 ist der Kolben 40, dem eine Kolbenstange 70 zugeordnet ist, axial verschiebbar. In der Kolbenstange 70 ist eine sog. Werkzeugaufnahme 120, die darin um einen kleinen Betrag axial verschiebbar ist, angeordnet. Der Werkzeugaufnahme 120 ist eine Abschaltstange 130 zugeordnet, die wiederum mit einem ersten Ventilschieber 100, der im Kolben 40 angeordnet ist, in Anlage gebracht werden kann.

Zum Verständnis der vorliegenden Erfindung nicht unbedingt erforderliche Komponenten, die in der Zeichnung zwar Bezugszeichen haben, aber von weniger Belang sind, werden nicht ausdrücklich behandelt, da sie sich dem Fachmann selbst erschließen.

In einer Ausgangsstellung (Stellung a) ist der Kolben 40 vollständig eingefahren. Der erste Ventilschieber 100 befindet sich in einer ersten Stellung I, in der er einen ersten Fluidkanal C offenhält und einen zweiten Fluidkanal D sperrt.

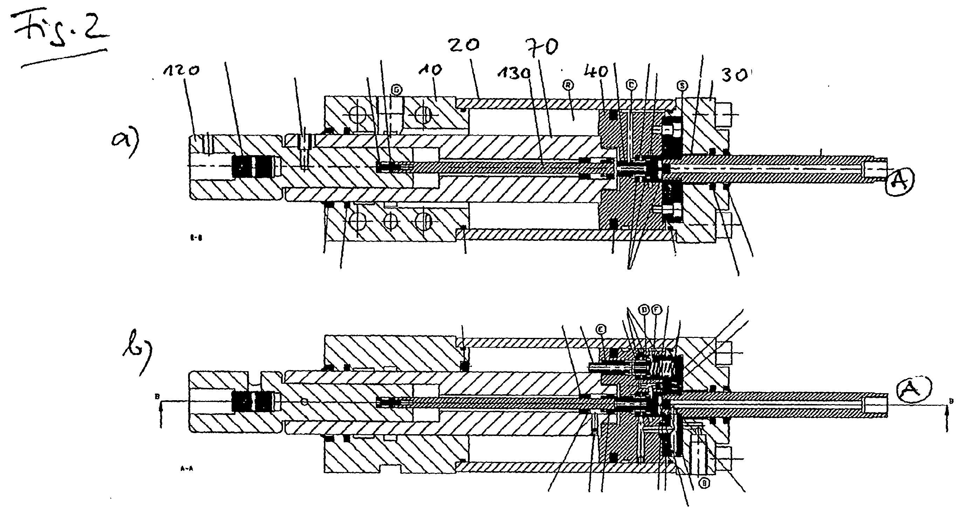

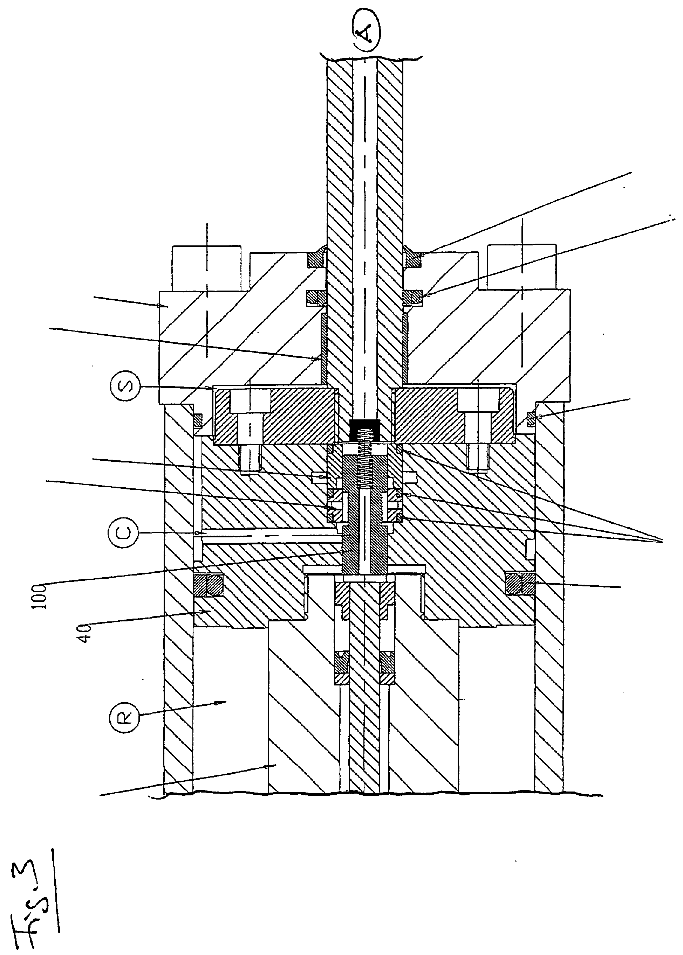

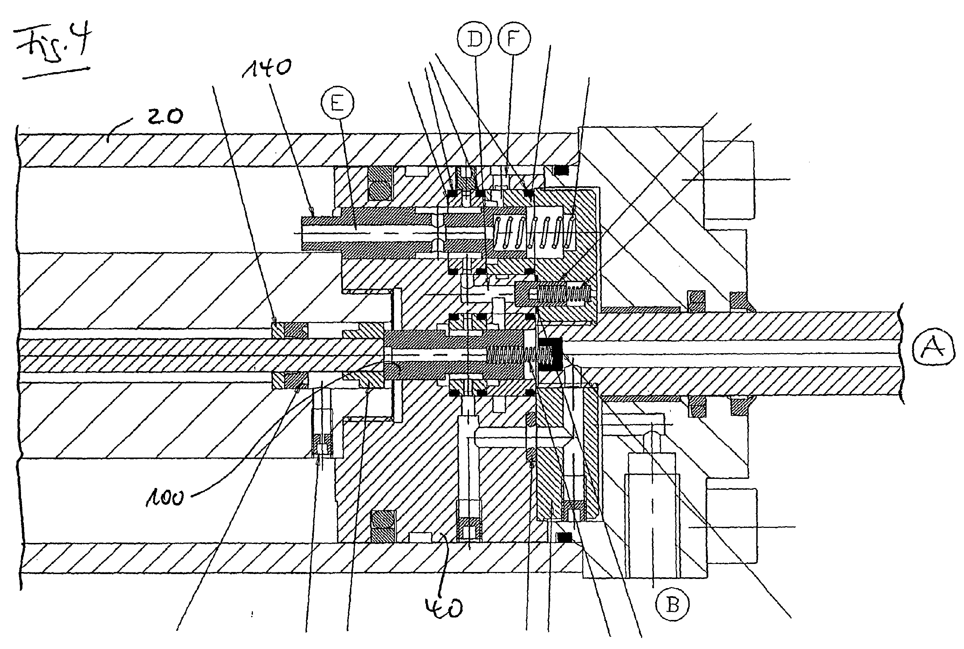

Die einzelnen Betriebsschritte beim Einsatz des erfindungsgemäßen Hydraulikzylinders sind folgende:
1. Zylinder ausfahren:
   Ein nicht gezeigtes Hauptventil wird geöffnet, so daß über einen Fluidkanal A und den vom Ventilschieber 100 offengehaltenen ersten Fluidkanal C ein Hydraulikmedium in einen Raum S (Fig. 3) über dem Kolben 40 strömen kann. Das Betriebsmedium strömt aus einem im Inneren des Zylindergehäuses 10 befindlichen Raum R "unter dem Kolben" durch eine Fluidleitung G (Fig. 2a) ab.
2. Die Werkzeugaufnahme 120 setzt mehr als 7 mm vor dem vorbestimmten Hubende auf ein Hindernis auf (Stellung 1b):
   Der Ventilschieber 100 wird (Fig. 4) von der Abschaltstange 130 in Fig. 4 nach rechts geschoben. Auf halbem Weg wird der Fluidkanal C vom Ventilschieber 100 geschlossen und der Fluidkanal D vom Ventilschieber 100 geöffnet. Daraufhin fließt das Hydraulikmedium aus der Zuleitung A drucklos über die Fluidkanäle D und E in den Raum R und von dort über die Leitung G ab. Das Fluidmedium im Raum S über dem Kolben 40 ist eingeschlossen. Die Folge ist, daß der Kolben 40 stehen bleibt (Abschaltfunktion).
3. Zurückfahren des Kolbens 40 aus der Stellung 1b:
   Das nicht gezeigte Hauptventil wird umgeschaltet. Der Zufluß des Hydraulikmediums in den Raum R über die Leitung G (Fig. 2a), der Abfluß des Mediums aus dem Raum S erfolgt über ein in einer Leitung B angeordnetes nicht gezeigtes Rückschlagventil.
4. Der Kolben 40 fährt in die Endlage (Stellung 1c):
   In einer sog. Sollposition (z.B. 7,5 mm vor Hubende) setzt ein im Kolben 40 untergebrachter zweiter Ventilschieber 140 auf einem im Zylindergehäuse 10 angeordneten Verschlußmittel 280 auf. Das in dieser beispielhaften Ausführungsform gewählte Verschlußmittel ist eine Kugel 280.
   Hierbei wird der dritte Fluidkanal E verschlossen. Gleichzeitig wird die Verbindung des vierten Fluidkanals F geöffnet. Wird nun das in der Werkzeugaufnahme 120 befindliche nicht gezeigte Clinchwerkzeug aufgesetzt, wird der Ventilschieber 100 über die Abschaltstange 130 betätigt und dadurch der erste Fluidkanal C verschlossen. Nun gelangt das Hydraulikmedium über die Leitungen A, D und F aber weiterhin in den Raum S. Der Kolben 40 bleibt nicht stehen, sondern fährt seinen vorbestimmten Hub zu Ende, bis in die in Fig. 1c dargestellte Stellung. Die Abschaltfunktion des Ventilschiebers 100 wird hierbei durch Betätigung des Ventilschiebers 140 außer Kraft gesetzt.
5. Zurückfahren des Kolbens 40 aus der Stellung 1c:
   Das nicht gezeigte Hauptventil wird wieder umgeschaltet. Über die Leitung G fließt das Medium in den Raum R. Über ein in Leitung B angeordnetes nicht gezeigtes Rückschlagventil fließt das Hydraulikmedium aus dem Raum S ab.
6. Wiedereinschalten der Abschaltfunktion:
   Zum Wiedereinschalten der Abschaltfunktion von Ventilschieber 100, die beim Arbeitsschritt 4. außer Kraft gesetzt wurde, muß der Ventilschieber 140 wieder in seine in Fig. 1a und Fig. 3 gezeigte Ausgangsstellung verschoben werden. Dies geschieht durch die Kraft einer in Fig. 4 gezeigten beispielhaft hier eingesetzten Schraubenfeder 390 beim Zurückfahren des Kolbens 40 in seine Ausgangsposition.
   Hierbei wird die Hydraulikleitung F wieder verschlossen und der dritte Fluidkanal E wieder geöffnet. Sollte nun der Ventilschieber 140 seine Ausgangsstellung nicht wieder erreichen, was durch Fehlfunktion der Feder 390 bedingt sein könnte, wird beim Zurückfahren des Kolbens 40 der Fluidkanal E geöffnet, bevor die Leitung F geschlossen ist. Dadurch ist dann der Raum R mit dem Raum S verbunden. Der Kolben kann nicht wieder zurückfahren.

## Patentansprüche

1. Hydraulikzylinder, mit einer wenigstens eine Werkzeugaufnahme (120) tragenden Kolbenstange (70), mit einer hydraulisch-mechanisch gesteuerte Selbstabschaltungseinrichtung, mit einem Medium zum Betreiben des Hydraulikzylinders, wobei das Medium, welches zum Kraftaufbau verwendet wird, gleichzeitig das Medium für die Selbstabschaltungseinrichtung ist, mit einem ersten Ventilschieber (100) und einem zweiten Ventilschieber (140), die geeignet sind, eine Bewegung eines mit der Kolbenstange (70) verbundenen Kolbens (40) abhängig von einem etwaigen im Fahrweg der ausfahrenden Kolbenstange (70) vor einer Sollposition befindlichen Hindernis durch Umleitung des Mediums im Bereich des Kolbens (40), abzuschalten, **dadurch gekennzeichnet, daß** der in einem Zylindergehäuse (10) verschiebbar angeordnete Kolben (40) mit einer Kolbenstange (70) versehen ist, welche eine darin axial verschiebbare Werkzeugaufnahme (120) trägt, wobei die Kolbenstange (70) eine axial verschiebbare Abschaltstange (130) aufweist, die mit dem im Kolben (40) axial verschiebbar angeordneten ersten Ventilschieber (100) in Anlage gebracht werden kann und geeignet ist, diesen aus einer ersten Stellung I, in der er einen ersten Fluidkanal (C) offenhält und einen zweiten Fluidkanal (D) sperrt, in eine zweite Stellung II, in der er den ersten Fluidkanal (C) sperrt und den zweiten Fluidkanal (D) offenhält, zu verschieben, wobei der im Kolben (40) verschiebbar angeordnete zweite Ventilschieber (140) einen dritten Fluidkanal (E) aufweist, der in der Sollposition des Kolbens (40) von einem im Zylindergehäuse (10) angeordneten Verschlußmittel (280) verschließbar ist und derart aus einer ersten Stellung III, in der er den dritten Fluidkanal (E) sperrt und einen vierten Fluidkanal (F) offenhält, in eine zweite Stellung IV, in der er den ersten Fluidkanal (C) sperrt und den vierten Fluidkanal (F) offenhält, verschiebbar ist, wodurch die Kolbenstange (70) mit der darin axial verschiebbar angeordneten Werkzeugaufnahme (120) von dem durch den vierten Fluidkanal (F) strömenden Medium eine vorbestimmte Strecke über die Sollposition hinaus bewegt werden kann.

## Claims

1. A hydraulic cylinder comprising a piston rod (70) mounting at least one tool mount (120), a hydromechanically controlled AUTO-lockout means, a medium for powering said hydraulic cylinder, said medium used for building up a force simultaneously being said medium for said AUTO-lockout means, a first valve spool (100) and a second valve spool (140) suitable for locking out motion of a piston (40) connected to said piston rod (70) as a function of an obstacle in the travel path of said advancing piston rod (70) before a setpoint position by redirecting said medium in the region of said piston (40), **characterized in that** said piston (40) shiftably disposed in a cylinder tube (10) is provided with a piston rod (70) which carries a tool mount (120) axially shiftable therein, said piston rod (70) comprising an axially shiftable lockout rod (130) for contacting said first valve spool (100) arranged axially shiftable in said piston (40) in shifting it from a first position I, in which it maintains a first fluid passage (C) open and blocks a second fluid passage (D), into a second position II in which it blocks said first fluid passage (C) and maintains said second fluid passage (D) open, said second valve spool (140) shiftably arranged in said piston (40) comprising a third fluid passage (E) which in said setpoint position of said piston (40) is closable by a closure means (280) disposed in said cylinder tube (10) and is shiftable from a first position III, in which it blocks said third fluid passage (E) and maintains a fourth fluid passage (F) open, into a second position IV in which it blocks said first fluid passage (C) and maintains said fourth fluid passage (F) open, resulting in said piston rod (70) with said tool mount (120) arranged axially shiftable therein being movable by said medium flowing in said fourth fluid passage (F) beyond said setpoint position by a predetermined distance.

## Revendications

1. Cylindre hydraulique comportant une tige de piston (70) portant au moins un raccordement d'outil (120), un dispositif de déclenchement automatique à commande hydraulico-mécanique, un fluide pour actionner le cylindre hydraulique, le fluide qui est utilisé pour développer la force étant simultanément le fluide pour le dispositif de déclenchement automatique, un premier tiroir de soupape (100) et un second tiroir de soupape (140) qui sont adaptés à arrêter un mouvement d'un piston (40) relié à la tige de piston (70) en fonction d'un obstacle éventuel se trouvant avant une position de consigne dans la course de la tige de piston (70) sortante par la déviation du fluide dans la zone du piston (40), **caractérisé en ce que** le piston (40) disposé de manière à pouvoir être déplacé dans un boîtier de cylindre (10) est pourvu d'une tige de piston (70) qui porte en elle un raccordement d'outil (120) pouvant être déplacé axialement, la tige de piston (70) présentant une tige de déclenchement (130) pouvant être déplacée axialement, qui peut être amenée en contact avec le premier tiroir de soupape (100) disposé de manière à pourvoir être déplacé axialement dans le piston (40) et qui est adaptée à déplacer celui-là d'une première position I dans laquelle il maintient ouvert un premier canal de fluide (C) et bloque un second canal de fluide (D) dans une seconde position II dans laquelle il bloque le premier canal de fluide (C) et maintient ouvert le second canal de fluide (D), le second tiroir de soupape (140) disposé de manière à pouvoir être déplacé dans le piston (40) présentant un troisième canal de fluide (E) qui dans la position de consigne du piston (40) peut être fermé dans la position de consigne du piston (40) par un moyen de fermeture (280) disposé dans le boîtier du cylindre (10) et qui à partir d'une première position III dans laquelle il bloque le troisième canal de fluide (E) et maintient ouvert un quatrième canal de fluide (F) peut être déplacé dans une seconde position IV dans laquelle il bloque le premier canal de fluide (C) et maintient ouvert le quatrième canal de fluide (F), par quoi la tige de piston (70) comportant le raccordement d'outil (120) disposé dans celle-ci de manière à pouvoir être déplacé axialement peut être déplacée d'une distance prédéterminée au-delà de la position de consigne par le fluide s'écoulant par le quatrième canal de fluide (F).
